# EUROPEAN PATENT APPLICATION

(11) **EP 3 823 231 A1**
(43) Date of publication of application: **19.05.2021**
(21) Application number: 19856600.2
(22) Date of filing: 03.09.2019
(51) Int. Cl.: H04L 25/02, H04L 5/00

(54) **INFORMATION TRANSMISSION METHOD, APPARATUS AND SYSTEM**

(30) Priority: 04.09.2018 CN 201811027896
(71) Applicant: HUAWEI TECHNOLOGIES CO., LTD., Shenzhen, Guangdong 518129 (CN)
(72) Inventor: YUAN, Pu, Shenzhen, Guangdong 518129 (CN); XIANG, Zhengzheng, Shenzhen, Guangdong 518129 (CN)
(74) Representative: Gill Jennings & Every LLP
(86) International application number: PCT/CN2019/104219
(87) International publication number: WO 2020/048456

(57) **Abstract**

Embodiments of this application disclose an information transmission method, apparatus, and system, to simplify the foregoing information exchange procedure, save a transmission resource, and improve information transmission efficiency. The method in this application includes: receiving, by a first communications device, first information sent by a second communications device and third information sent by a third communications device, where the first information and the third information are sent on a same time-frequency resource; generating, by the first communications device, second information based on the first information and the third information; and sending, by the first communications device, the second information and first indication information to the second communications device and the third communications device, where the first indication information is used to indicate that the second information is generated based on the first information and the third information.

## Description

This application claims priority to Chinese Patent Application No. 201811027896.7, filed with the Chinese Patent Office on September 4, 2018 and entitled "INFORMATION TRANSMISSION METHOD, APPARATUS, AND SYSTEM", which is incorporated herein by reference in its entirety.

### TECHNICAL FIELD

This application relates to the field of wireless communications technologies, and in particular, to an information transmission method, apparatus, and system.

### BACKGROUND

Currently, in a wireless communications technology, when two terminals need to perform data transmission, the two terminals cannot directly transmit data to each other because there is no corresponding transmission interface between the two terminals or a transmission distance is limited. Therefore, data transmission between the two terminals needs to be indirectly implemented by forwarding data by a relay device.

In a process in which the relay device performs data exchange for the two terminals, the relay device needs to receive a signal sent by one of the two terminals, and forward the signal to the other terminal. For example, the relay device receives first information sent by a first terminal, then the relay device receives second information sent by a second terminal subsequently, and finally, the relay device forwards the first information to the second terminal, and forwards the second information to the first terminal.

In the foregoing information exchange process, four steps are required to complete information exchange between the first terminal and the second terminal, and there are relatively many information exchange procedures. Consequently, the information exchange takes a relatively long time, and causes a waste of transmission resources.

### SUMMARY

Embodiments of this application provide an information transmission method, apparatus, and system, to simplify the foregoing information exchange procedure, save a transmission resource, and improve information transmission efficiency.

To achieve the foregoing technical objectives, the embodiments of this application provide the following technical solutions:
A first aspect of the embodiments of this application provides an information transmission method. The information transmission method may be used in a scenario in which a third-party device performs data exchange for at least two devices. During execution, the information transmission method relates to a first communications device, a second communications device, and a third communications device. The first communications device serves as a relay node or a relay device to provide a data forwarding service for the second communications device and the third communications device. The information transmission method may include: The first communications device receives first information sent by the second communications device and third information sent by the third communications device simultaneously, where the first information and the third information are sent on a same time-frequency resource simultaneously; the first communications device generates second information based on the first information and the third information; and the first communications device sends the second information and first indication message to the second communications device and the third communications device, where the first indication message is used to indicate that the second information is generated based on the first information and the third information. Optionally, the first communications device sends the second information and second indication information to the second communications device and the third communications device simultaneously, and a specific implementation may be as follows: The first communications device may send the second information and the second indication information to the second communications device and the third communications device simultaneously in a broadcast manner or a multicast manner. It can be learned from the foregoing technical solution in the first aspect that the first communications device receives the first information and the third information on the same time-frequency resource simultaneously, so that a transmission resource is fully utilized, and an information receiving procedure is simplified. In addition, the first communications device directly generates the second information based on the received first information and the received third information, and directly sends the second information to the second communications device and the third communications device, so that an information forwarding procedure is effectively simplified. Therefore, in the technical solution in the first aspect, an information exchange procedure of the first communications device is simplified, the transmission resource is fully utilized and saved, and information transmission efficiency is improved.

Optionally, in the foregoing first aspect, the first communications device is a relay device or a relay node that has a relay and forwarding function. Specifically, the first communications device may be a base station or a terminal, the second communications device and the third communications device may be common terminals or common nodes, and the third communications device may be one communications device or a plurality of communications devices, where "a plurality of" means two or more.

Optionally, with reference to the first aspect, in a first possible implementation, in addition to indicating that the second information is generated based on the first information and the third information, the first indication information may further indicate a physical layer network coding scheme. In this case, the first communications device superposes, according to the preset physical layer network coding scheme, the first information and the third information to obtain the second information. Optionally, superposing means that the first information and the third information are combined into the second information in a specific calculation manner without a decoding operation, and the second information includes both the first information and the third information. For example, the specific calculation manner may be an exclusive OR operation. It can be learned from the foregoing first possible implementation of the first aspect that the first communications device may directly superpose the first information and the third information without performing complex decoding on the first information and the third information, so that calculation complexity of the first communications device can be effectively reduced, and the first communications device only needs to simply superpose information. Therefore, in the foregoing first possible implementation of the first aspect, the information calculation complexity of the first communications device can be reduced, and an operation time can be reduced. In this way, information forwarding efficiency of the first communications device is further improved, and an information forwarding delay is reduced.

Optionally, in the foregoing first possible implementation of the first aspect, when the first communications device is a base station, the first indication information may be sent through downlink control information on a physical downlink control channel, or may be sent as a radio resource control message on a physical downlink shared channel.

Optionally, with reference to the foregoing first aspect and the first possible implementation of the first aspect, in a second possible implementation, before the first communications device receives the first information sent by the second communications device, the second communications device may further notify the first communications device to forward the first information, and a specific implementation may be as follows: The first communications device receives the second indication information sent by the second communications device, where the second indication information is used to indicate the first communications device to send the first information to the third communications device.

Optionally, in the foregoing second possible implementation, when the first communications device is the base station, the second indication information may be sent through uplink channel (including an uplink control channel and an uplink data channel) information that is sent by the second communications device to the base station, and the uplink information may be specifically an uplink request (uplink request) or any uplink signaling. Certainly, the second communications device may further send the second indication information separately. This is not limited in this application.

Optionally, still in the foregoing second possible implementation, before the first communications device receives the first information sent by the second communications device, the third communications device may further notify the first communications device to forward the third information, and a specific implementation may be as follows: The first communications device receives third indication information sent by the third communications device. Optionally, when the first communications device is the base station, the third indication information may be sent through uplink control channel or uplink data channel information sent by the third communications device to the base station. The third communications device may further send the third indication information separately. This is not limited in this application.

Optionally, with reference to the foregoing second possible implementation of the first aspect, in a third possible implementation, if the second indication information carries a first pilot signal used for first channel amplitude estimation, after receiving the second indication information, the first communications device obtains a first channel amplitude through channel estimation based on the first pilot signal. It may be understood that the first channel amplitude is a channel amplitude between the first communications device and the second communications device, and the first communications device sends the first channel amplitude to the second communications device, so that the second communications device obtains the first information through precoding based on the first channel amplitude. It can be learned from the foregoing third possible implementation of the first aspect that the first communications device obtains the first channel amplitude through channel estimation based on the first pilot signal, and notifies the second communications device of the first channel amplitude, so that the second communications device obtains the first information through precoding based on the first channel amplitude. In this way, when receiving the first information, the first communications device can directly superpose the first information and the third information without decoding the first information. Therefore, the calculation complexity of the first communications device is reduced, the forwarding delay is reduced, and the forwarding efficiency is further improved.

Optionally, with reference to the foregoing second possible implementation of the first aspect, in a fourth possible implementation, if the third indication information carries a second pilot signal, where the second pilot signal is used for channel estimation of a second channel amplitude, after receiving the third indication information, the first communications device obtains the second channel amplitude through channel estimation based on the second pilot signal, and sends the second channel amplitude to the second communications device. It may be understood that the second channel amplitude and the second communications device are in one-to-one correspondence, to be specific, one second channel amplitude corresponds to one second communications device.

Optionally, with reference to the foregoing second possible implementation of the first aspect, in a fifth possible implementation, if the second indication information does not carry a first pilot signal, in this case, after receiving the second indication information, the first communications device needs to send the first pilot signal to the second communications device, so that the second communications device obtains a first channel amplitude through channel estimation based on the first pilot signal, and obtains the first information through precoding based on the first channel amplitude.

Optionally, with reference to the foregoing second possible implementation of the first aspect, in a sixth possible implementation, similar to the foregoing fifth possible implementation, if the third indication information does not carry a second pilot signal, in this case, the first communications device also needs to send the second pilot signal to the third communications device (to be specific, one third communications device receives one second pilot signal), so that each third communications device performs the following operation: The third communications device obtains a second channel amplitude through channel estimation based on the received second pilot signal, and obtains the third information through precoding based on the second channel amplitude that is obtained through estimation performed by the third communications device.

It should be noted that technical effects of the foregoing fourth to the sixth possible implementations are similar to beneficial effects corresponding to the foregoing third possible implementation, and details are not described herein again.

Optionally, in the foregoing third to the sixth possible implementations of the first aspect, when the first communications device is the base station, first, the first pilot signal or the second pilot signal may be a demodulation reference signal or a channel state information reference signal, or may be a dedicated reference signal. This application is not limited thereto. Second, the foregoing first pilot signal or second pilot signal may be sent on a physical downlink control channel, or may be sent on a physical downlink shared channel. This is not limited in this application. Finally, when the first pilot signal or the second pilot signal is the dedicated reference signal, the dedicated reference signal may be any one of a ZC sequence, an M sequence, and a Gold sequence. This is not limited in this application either.

A second aspect of the embodiments of this application provides an information transmission method, and the information transmission method includes: A second communications device sends first information to a first communications device, where the first information and third information are sent on a same time-frequency resource simultaneously, and the third information is information received by the first communications device from a third communications device; the second communications device receives second information and first indication information that are sent by the first communications device, where the second information is generated by the first communications device based on the first information and the third information, and the first indication information is used to indicate the foregoing generation manner of the second information; and the second communications device obtains the third information based on the first information, the second information, and the first indication information.

Optionally, in the foregoing second aspect, the first indication information is further used to indicate a physical layer network coding scheme, so that the second communications device obtains the third information from the second information through mapping according to a predetermined physical layer network coding scheme.

Optionally, with reference to the second aspect, in a first possible implementation of the second aspect, before that a second communications device sends first information to a first communications device, the method further includes: The second communications device sends second indication information to the first communications device, where the second indication information is used to indicate the first communications device to forward the first information to the third communications device.

Optionally, with reference to the foregoing first possible implementation of the second aspect, in a second possible implementation of the second aspect, if the foregoing second indication information carries a first pilot signal, where the first pilot signal is used for measurement of a first channel amplitude, and the first channel amplitude is a channel amplitude between the first communications device and the second communications device, before that a second communications device sends first information to a first communications device, the method further includes: The second communications device receives the first channel amplitude sent by the first communications device, where the first channel amplitude is obtained by the first communications device through channel estimation based on the first pilot signal carried in the foregoing second indication information; and further, the second communications device obtains the first information through precoding by using the foregoing first channel amplitude.

Optionally, with reference to the foregoing first possible implementation of the second aspect, in a third possible implementation of the second aspect, if the foregoing second indication information does not carry a first pilot signal, where the first pilot signal is used for measurement of a first channel amplitude, and the first channel amplitude is a channel amplitude between the first communications device and the second communications device, after sending the second indication information, the second communications device receives the first pilot signal sent by the first communications device; further, the second communications device obtains the first channel amplitude through channel estimation based on the first pilot signal sent by the first communications device alone; and finally, the second communications device obtains the first information through precoding by using the first channel amplitude obtained through channel estimation performed by the second communications device.

A third aspect of the embodiments of this application provides an information transmission method, and the information transmission method includes: A third communications device sends third information to a first communications device, where the third information and first information are sent on a same time-frequency resource, and the first information is information received by the first communications device from a second communications device; the third communications device receives second information and first indication information that are sent by the first communications device, where the second information is generated by the first communications device based on the first information and the third information, and the first indication information is used to indicate that the second information is generated based on the first information and the third information; and the third communications device obtains the first information based on the third information, the second information, and the first indication information.

Optionally, in the foregoing third aspect, the first indication information is further used to indicate a physical layer network coding scheme, so that the third communications device obtains the first information from the second information through mapping according to a predetermined physical layer network coding scheme.

Optionally, with reference to the foregoing third aspect, in a first possible implementation of the third aspect, before that a third communications device sends third information to a first communications device, the method further includes: The third communications device sends third indication information to the first communications device.

Optionally, with reference to the foregoing first possible implementation of the third aspect, in a second possible implementation of the third aspect, if all pieces of third indication information carry the second pilot signal, in other words, one piece of third indication information carries one second pilot signal, where all second pilot signals are used for channel measurement of a second channel amplitude, before that a third communications device sends third information to a first communications device, the method further includes: The third communications device receives the second channel amplitude sent by the first communications device, in other words, all third communications devices receive one second channel amplitude that is between the third communications device and the first communications device and that is sent by the first communications device, where each second channel amplitude is obtained by the first communications device through channel estimation by using each second pilot signal; and each third communications device obtains the third information through precoding by using a second channel amplitude of each third communications device.

Optionally, with reference to the foregoing first possible implementation of the third aspect, in a third possible implementation of the third aspect, if the foregoing third indication information does not carry the second pilot signal, in other words, no piece of third indication information carries the second pilot signal, in this case, after sending a piece of third indication information of each third communications device to the first communications device, each third communications device separately receives each second channel amplitude sent by the first communications device; further, each third communications device obtains a second channel amplitude that is between each third communications device and the first communications device through channel estimation based on a second pilot signal received by each third communications device; and finally, each third communications device obtains the third information through precoding by using the second channel amplitude obtained by each third communications device through channel estimation.

A fourth aspect of this application provides a first communications device. The first communications device has a function of implementing the method in any one of the first aspect or the possible implementations of the first aspect. The function may be implemented by hardware, or may be implemented by hardware executing corresponding software. The hardware or the software includes one or more modules corresponding to the foregoing functions.

A fifth aspect of this application provides a second communications device. The second communications device has a function of implementing the method in any one of the second aspect or the possible implementations of the second aspect. The function may be implemented by hardware, or may be implemented by hardware executing corresponding software. The hardware or the software includes one or more modules corresponding to the foregoing functions.

A sixth aspect of this application provides a third communications device. The third communications device has a function of implementing the method in any one of the third aspect or the possible implementations of the third aspect. The function may be implemented by hardware, or may be implemented by hardware executing corresponding software. The hardware or the software includes one or more modules corresponding to the foregoing functions.

A seventh aspect of the embodiments of this application provides a first communications device, and the first communications device includes a processor and a memory. The memory is configured to store a computer-executable instruction. When the first communications device runs, the processor executes the computer-executable instruction stored in the memory, so that the first communications device performs the information transmission method according to any one of the first aspect or the possible implementations of the first aspect.

An eighth aspect of the embodiments of this application provides a second communications device, and the second communications device includes a processor and a memory. The memory is configured to store a computer-executable instruction. When the second communications device runs, the processor executes the computer-executable instruction stored in the memory, so that the second communications device performs the information transmission method according to any one of the second aspect or the possible implementations of the second aspect.

A ninth aspect of the embodiments of this application provides a third communications device, and the third communications device includes a processor and a memory. The memory is configured to store a computer-executable instruction. When the third communications device runs, the processor executes the computer-executable instruction stored in the memory, so that the third communications device performs the information transmission method according to any one of the third aspect or the possible implementations of the third aspect.

A tenth aspect of the embodiments of this application provides a computer storage medium. The computer-readable storage medium stores an instruction. When the instruction is run on a computer, the computer is enabled to perform the information transmission method according to any one of the first aspect or the possible implementations of the first aspect.

An eleventh aspect of the embodiments of this application provides a computer storage medium. The computer-readable storage medium stores an instruction. When the instruction is run on a computer, the computer is enabled to perform the information transmission method according to any one of the second aspect or the possible implementations of the second aspect.

A twelfth aspect of the embodiments of this application provides a computer storage medium. The computer-readable storage medium stores an instruction. When the instruction is run on a computer, the computer is enabled to perform the information transmission method according to any one of the third aspect or the possible implementations of the third aspect.

A thirteenth aspect of the embodiments of this application provides a computer program product. When the computer program product runs on a computer, the computer is enabled to perform the information transmission method according to any one of the first aspect or the possible implementations of the first aspect.

A fourteenth aspect of the embodiments of this application provides a computer program product. When the computer program product runs on a computer, the computer is enabled to perform the information transmission method according to any one of the second aspect or the possible implementations of the second aspect.

A fifteenth aspect of the embodiments of this application provides a computer program product. When the computer program product runs on a computer, the computer is enabled to perform the information transmission method according to any one of the third aspect or the possible implementations of the third aspect.

For technical effects brought by any implementation in the second to the fifteenth aspects of the embodiments of this application, refer to technical effects brought by different implementations in the first aspect. Details are not described herein again.

A sixteenth aspect of the embodiments of this application provides an information transmission system, and the system includes a first communications device, a second communications device, and a third communications device. The first communications device is the first communications device described in any one of the first aspect or the possible implementations of the first aspect, the second communications device is the second communications device described in any one of the second aspect or the possible implementations of the second aspect, and the third communications device is the third communications device described in any one of the third aspect or the possible implementations of the third aspect. Therefore, an information forwarding process in the information transmission system is effectively simplified, a transmission resource is fully utilized and saved, and information transmission efficiency is improved.

### BRIEF DESCRIPTION OF DRAWINGS

To describe the technical solutions in embodiments of this application more clearly, the following briefly describes the accompanying drawings used in describing the embodiments. It is clear that, the accompanying drawings in the following description show merely some embodiments of this application, and persons of ordinary skill in the art may still derive other drawings from these accompanying drawings without creative efforts.
FIG. 1 is a schematic diagram of an embodiment of an information transmission system according to an embodiment of this application;
FIG. 2 is a schematic diagram of an embodiment of another information transmission system according to an embodiment of this application;
FIG. 3 is a schematic diagram of an embodiment of an information transmission method according to an embodiment of this application;
FIG. 4 is a schematic diagram of another embodiment of an information transmission method according to an embodiment of this application;
FIG. 5 is a schematic diagram of a hardware structure of a communications device according to an embodiment of this application; and
FIG. 6 is a schematic structural diagram of a communications device according to an embodiment of this application.

### DESCRIPTION OF EMBODIMENTS

The following describes the embodiments of this application with reference to the accompanying drawings. It is clear that the described embodiments are merely some but not all of the embodiments of this application. A person of ordinary skill in the art may learn that as a technology evolves and a new scenario emerges, the technical solutions provided in the embodiments of this application are also applicable to a similar technical problem.

The embodiments of this application provide an information transmission method, apparatus, and system, to optimize a procedure of providing data exchange between terminals by a relay device. By simplifying an information exchange procedure, objectives such as saving a transmission resource, reducing a transmission delay, and improving information transmission efficiency are achieved. The following provides detailed descriptions.

The term "and/or" appeared in this application describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

In the specification, claims, and accompanying drawings of this application, the terms "first", "second", and so on are intended to distinguish between similar objects, but do not necessarily indicate a specific order or sequence. It should be understood that the data used in such a way are interchangeable in proper circumstances so that the embodiments described herein can be implemented in other orders than the order illustrated or described herein. Moreover, the terms "include", "have" and any variants thereof mean to cover the non-exclusive inclusion, for example, a process, method, system, product, or device that includes a list of steps or units is not necessarily limited to those steps or units, but may include other steps or units not expressly listed or inherent to such a process, method, system, product, or device. Names or numbers of steps in this application do not mean that steps in a method procedure need to be performed according to a chronological/logical order indicated by the names or numbers. An execution sequence of the steps in the procedure that have been named or numbered may be changed based on technical objectives to be implemented, provided that a same or similar technical effect can be achieved. Division into modules in this application is logical division and may be another division manner during implementation in actual application. For example, a plurality of modules may be combined or integrated into another system, or some features may be ignored or not performed. In addition, the displayed or discussed mutual couplings, direct couplings, or communication connections may be implemented through some interfaces. Indirect couplings or communication connections between the modules may be implemented in electrical or another form. This is not limited in this application. In addition, modules or sub-modules described as separate components may be or may not be physically separated, may be or may not be physical modules, or may be distributed into a plurality of circuit modules. Objectives of the solutions of this application may be achieved by selecting some or all of the modules based on an actual requirement.

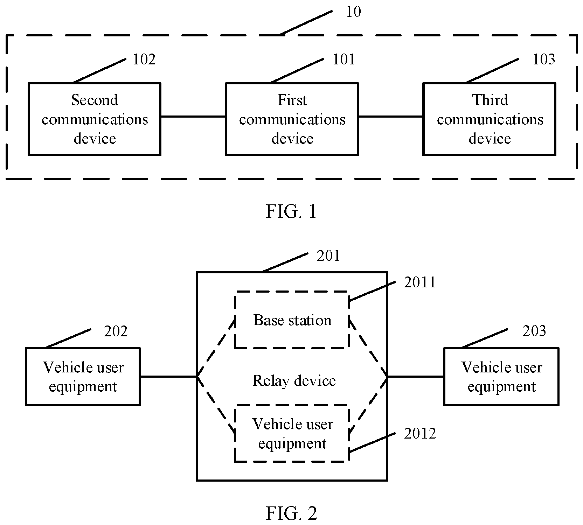

FIG. 1 is a schematic diagram of an embodiment of an information transmission system according to an embodiment of this application.

As shown in FIG. 1, an information transmission system 10 includes a first communications device 101, a second communications device 102, and a third communications device 103. In this application, there may be one third communications device or a plurality of third communications devices, and "a plurality of' means two or more. In FIG. 1, only one third communications device 103 is used as an example for detailed description.

The first communications device 101 is configured to receive first information sent by the second communications device 102 and third information sent by the third communications device 103, where the first information and the third information are sent on a same time-frequency resource; the first communications device 101 generates second information based on the first information and the third information; and the first communications device 101 sends the second information and first indication information to the second communications device 102 and the third communications device 103, where the first indication information is used to indicate that the second information is generated based on the first information and the third information.

Optionally, when the first communications device 101 sends the second message and the first indication information to the second communications device 102 and the third communications device 103, the first communications device 101 may send the second information and the first indication information to the second communications device 102 and the third communications device 103 through a broadcast channel or a multicast channel.

Optionally, before the first communications device 101 receives the first information sent by the second communications device 102, the second communications device 102 sends second indication information to the first communications device 101, where the second indication information is used to indicate the first communications device 101 to forward the first information to the third communications device 103. Similarly, optionally, before the first communications device 101 receives the third information sent by the third communications device 103, the third communications device 103 sends third indication information to the first communications device 101.

With reference to the optional implementation solution corresponding to the second indication information, a first optional implementation of the second indication information is: If the second indication information carries a first pilot signal, where the first pilot signal is used for channel estimation of a first channel amplitude, and, after the first communications device 101 receives the second indication information that carries the first pilot signal, the first communications device 101 obtains a channel amplitude, namely, the first channel amplitude, of a channel between the first communications device 101 and the second communications device 102 through channel estimation based on the first pilot signal. Then the first communications device 101 sends the first channel amplitude to the second communications device 102, so that the second communications device 102 obtains the first information through precoding based on the first channel amplitude. In this way, channel impact on the first information in a channel transmission process is reduced, and information transmission quality is improved.

A second optional implementation of the second indication information is: If the second indication information does not carry a first pilot signal, after the first communications device 101 receives the second indication information that does not carry the first pilot signal, the first communications device 101 sends the first pilot signal to the second communications device 102, so that the second communications device 102 obtains a channel amplitude, namely, a first channel amplitude, of a channel between the first communications device 101 and the second communications device 102 through channel estimation based on the first pilot signal. Then the second communications device 102 obtains the first information through precoding based on the first channel amplitude.

With reference to the optional implementation solution corresponding to the third indication information, a first optional implementation of the third indication information is: If the third information carries a second pilot signal, to be specific, one piece of third information carries one second pilot signal, and the second pilot signal is used for channel estimation of a second channel amplitude, after the first communications device 101 receives the third indication signal that carries the second pilot signal, the first communications device 101 obtains the second channel amplitude, namely, the second channel amplitude, between the first communications device 101 and each third communications device 103 through channel estimation based on the second pilot signal. Then the first communications device 101 sends, to each communications device in the third communications device 103, a second channel amplitude corresponding to each communications device, so that each communications device in the third communications device 103 obtains the third information, namely, the third information, through precoding based on the second channel amplitude corresponding to each communications device. In this way, channel impact on at least the third information in a channel transmission process of each communications device is reduced, and information transmission quality is improved.

A second optional implementation of the third indication information is: If the third information does not carry a second pilot signal, after the first communications device 101 receives the third indication signal that does not carry the second pilot signal, the first communications device 101 sends the second pilot signal to any communications device in the third communications device 103, so that any communications device in the third communications device 103 obtains a second channel amplitude, namely, a second channel amplitude, between the first communications device 101 and each third communications device 103 through channel measurement by using the second pilot signal. Finally, each communications device in the third communications device 103 obtains the third information, namely, the third information, through precoding based on a second channel amplitude corresponding to each communications device.

The foregoing information transmission system may be used in a V2X vehicle to everything wireless communications technology. V2X (vehicle to everything) means connecting a vehicle to everything by using a next-generation information communications technology, to implement comprehensive connection and information exchange such as vehicle to vehicle (vehicle to vehicle), vehicle to roadside infrastructure (vehicle to infrastructure), vehicle to pedestrian and other vulnerable traffic participants (vehicle to pedestrian), and vehicle to cloud service platform (vehicle to network). NR-V2X refers to a V2X vehicle to everything wireless communications technology evolved based on a 5G mobile communications technology. In the NR-V2X, two air interfaces are defined. A first type of air interface is referred to as a Uu interface, and a communications protocol between user equipment (user equipment, UE) and a base station is defined. A second type of air interface is a PC5 interface, and a communications protocol between UEs is defined, where the UE includes vehicle user equipment (vehicle user equipment, VUE).

FIG. 2 is a schematic diagram of an embodiment of another information transmission system according to an embodiment of this application. As shown in FIG. 2, vehicle user equipment 202, a relay device 201, and vehicle user equipment 203 are included. The relay device 201 may be a base station 2011 or vehicle user equipment 2012. The first communications device 101 may be specifically the relay device 201 (including the base station 2011 or the vehicle user equipment 2012), and both the second communications device 102 and the third communications device 103 may be specifically either of the vehicle user equipment 202 and the vehicle user equipment 203.

An information transmission function of the first communications device 101 may be implemented by a base station, or may be implemented by a terminal. Specifically, when the first communications device 101 is the base station 2011 in FIG. 2, the information transmission method provided in this embodiment of this application is applicable to cellular communication between Uu interfaces by using a cellular network. When the first communications device 101 is the vehicle user equipment 2012 in FIG. 2, the information transmission method provided in this embodiment of this application is applicable for a PC5 interface to implement direct communication between vehicle user equipment. The following provides detailed descriptions of the foregoing two communication manners.

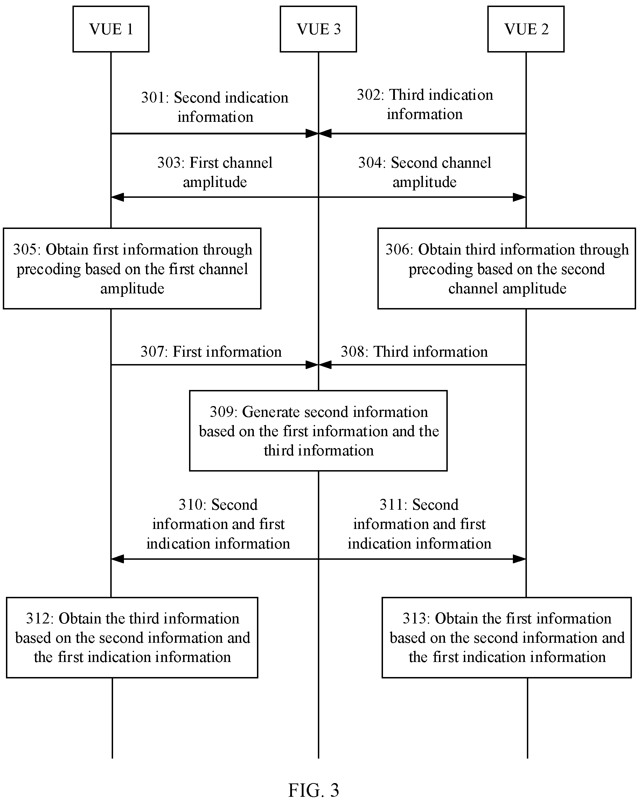

FIG. 3 is a schematic diagram of an embodiment of an information transmission method according to an embodiment of this application. As shown in FIG. 3, a base station or VUE 2 serves as the first communications device 101 to implement the information transmission function of the first communications device 101, VUE 1 serves as the second communications device 102 to implement an information transmission function of the second communications device 102, and VUE 3 serves as the third communications device 103 to implement an information transmission function of the third communications device 103.

301: The VUE 1 sends second indication information to the base station or the VUE 2.

302: The VUE 3 sends third indication information to the base station or the VUE 2.

The second indication information and the third indication information carry the first pilot signal and the second pilot signal respectively, so that the base station or the VUE 2 performs channel measurement based on the first pilot signal and the second pilot signal separately.

Optionally, when the base station serves as the relay device, the second indication information and the third indication information may be sent respectively through uplink information of the VUE 1 and the VUE 3, for example, through a physical uplink control channel (physical downlink control channel, PDCCH) or a physical uplink data channel (physical downlink shared channel, PDSCH). Similarly, the first pilot signal or the second pilot signal may be a demodulation reference signal (demodulation reference signal, DMRS) or a channel state information reference signal (channel state information reference signal, CSI-RS), or may be a dedicated reference signal.

Optionally, the first pilot signal or the second pilot signal may be any one of a ZC sequence, an M sequence, and a Gold sequence.

303: The base station or the VUE 2 sends a first channel amplitude to the VUE 1.

The first channel amplitude is a channel amplitude that corresponds to a channel between the base station or the VUE 2 and the VUE 1 and that is obtained by the base station or the VUE 2 through channel estimation based on the first pilot signal received by the base station or the VUE 2.

304: The base station or the VUE 2 sends a second channel amplitude to the VUE 3.

Similar to the first channel amplitude, the second channel amplitude is a channel amplitude that corresponds to a channel between the base station or the VUE 2 and the VUE 3 and that is obtained by the base station or the VUE 2 through channel estimation based on the second pilot signal received by the base station or the VUE 2.

305: The VUE 1 obtains first information through precoding based on the first channel amplitude.

306: The VUE 3 obtains third information through precoding based on the second channel amplitude.

307: The VUE 1 sends the first information to the base station or the VUE 2, and the first information and the third information are sent on a same time-frequency resource by using a same transport block (transform block, TB) size size.

308: The VUE 3 sends the third information to the base station or the VUE 2, and the third information and the first information are sent on a same time-frequency resource by using a same TB size.

For example, if the channel amplitude, namely, the first channel amplitude, of the channel between the base station or the VUE 2 and the VUE 1 is HI, and information to be sent by the VUE 1 to the base station or the VUE 2 is e 1, the first information obtained by the base station or the VUE 2 through precoding on the e 1 by using the HI is {(*H*1^{∗}*e*1)/|*H*1|²}. Similarly, if the channel amplitude, namely, the second channel amplitude, of the channel between the base station or the VUE 2 and the VUE 3 is H3, and information to be sent by the VUE 3 to the base station or the VUE 2 is e3, the third information obtained by the base station or the VUE 2 through precoding on the e3 by using the H3 is {(*H*3^{∗}*e*3)/|*H*/3|²}.

309: The base station or the VUE 2 generates the second information based on the first information and the third information.

It should be noted that, because the first information and the third information are obtained through precoding based on channel amplitudes corresponding to the first information and the third information, the first information and the third information are enabled to overcome impact on the channel amplitudes in a channel transmission process. Therefore, a signal actually received by the base station or the VUE 2 is the information to be sent before precoding. In addition, in a sending process, the VUE 1 and the VUE 3 send the first information and the third information respectively on a same time-frequency resource by using a same TB size. Therefore, the base station or the VUE 2 receives the first information and the third information simultaneously, to be specific, the base station or the VUE 2 actually receives a modulated signal obtained by superposing the first information and the third information.

Optionally, after receiving the modulated signal obtained by superposing the first information and the third information, the base station or the VUE 2 further obtains binary information through physical layer network coding (physical layer network code, PNC) on the received superposed modulated signal, and obtains the second information through coding and modulation on the binary information.

310: The base station or the VUE 2 sends the second information and the first indication information to the VUE 1.

311: The base station or the VUE 2 sends the second information and the first indication information to the VUE 3.

The first indication information is used to indicate that the second information is generated based on the first information and the third information.

Optionally, the base station or the VUE 2 sends the second indication information and the first indication information to the VUE 1 and the VUE 3 simultaneously in a broadcast manner or a multicast manner.

Optionally, the first indication information may be a PNC indicator, and the PNC indicator is used to indicate to the VUE 1 and the VUE 3 that the first information is transmitted in a PNC manner. For example,

It should be noted that, optionally, when the base station serves as the relay device, the first indication information may be sent to the VUE 1 and the VUE 3 separately through downlink channels of the base station. For example, the base station sends the first indication information through downlink control information (downlink control information, DCI) of a PDCCH.

312: The VUE 1 obtains the third information based on the second information and the first indication information.

313: The VUE 3 obtains the first information based on the second information and the first indication information.

After receiving the first information and the first indication information that are sent by the base station or the VUE 2, the VUE 1 and the VUE 3 obtain the third information and the first information through demodulation based on the first information and the first indication information respectively.

It can be learned from the foregoing embodiment of the information transmission method that the VUE 1 and the VUE 3 simultaneously send information to the base station or the VUE 2 by using a same TB size on a same time-frequency resource, so that the base station or the VUE 2 only needs to receive the information once, and the information of the VUE 1 and the VUE 3 can be received simultaneously. In this way, a receiving time can be shortened, and information transmission efficiency can be improved.

Further, the information is precoded by using the channel amplitude, so that a signal received by the base station or the VUE 2 is not affected by a transmission channel. After receiving the superposed signal of the first information and the third information simultaneously, without separately decoding the first information and the third information, the base station or the VUE 2 can directly encode and modulate the first information and the third information into the second information, and then send the second information.

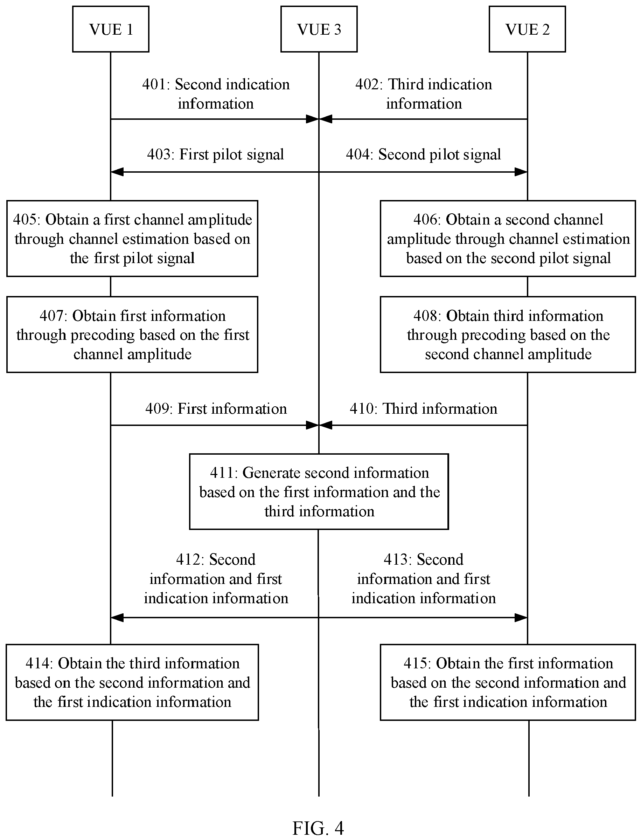

FIG. 4 is a schematic diagram of an embodiment of another information transmission method according to an embodiment of this application. Similar to that in FIG. 3, in FIG. 4, a base station or VUE 2 serves as the first communications device 101 to implement the information transmission function of the first communications device 101, VUE 1 serves as the second communications device 102 to implement an information transmission function of the second communications device 102, and VUE 3 serves as the third communications device 103 to implement an information transmission function of the third communications device 103. A difference of the embodiment corresponding to FIG. 4 from the embodiment corresponding to FIG. 3 lies in that: Channel amplitude measurement in FIG. 4 is completed by the VUE 1 and the VUE 3, while in FIG. 3, the channel amplitude is measured by the base station or the VUE 2, and is delivered to the VUE 1 and the VUE 3.

401: The base station or the VUE 2 receives the second indication information sent by the VUE 1.

402: The base station or the VUE 2 receives the third indication information sent by the VUE 3.

Neither the second indication information nor the third indication information carries a pilot signal for measuring the channel amplitude.

403: The base station or the VUE 2 sends the first pilot signal to the VUE 1.

404: The base station or the VUE 2 sends the second pilot signal to the VUE 3.

The first pilot signal is used by the VUE 1 for channel estimation, and the second pilot signal is used by the VUE 3 for channel estimation.

Optionally, the first pilot signal or the second pilot signal may be a demodulation reference signal DMRS or a channel state information reference signal CSI-RS, or may be a dedicated reference signal.

Optionally, the first pilot signal or the second pilot signal may be any one of a ZC sequence, an M sequence, and a Gold sequence.

405: The VUE 1 obtains the first channel amplitude through channel estimation based on the first pilot signal.

406: The VUE 3 obtains the second channel amplitude through channel estimation based on the second pilot signal.

407: The VUE 1 obtains the first information through precoding based on the first channel amplitude.

408: The VUE 3 obtains the third information through precoding based on the second channel amplitude.

409: The VUE 1 sends the first information to the base station or the VUE 2.

410: The VUE 3 sends the third information to the base station or the VUE 2.

411: The base station or the VUE 2 generates the second information based on the first information and the third information.

412: The base station or the VUE 2 sends the second information and the first indication information to the VUE 1.

413: The base station or the VUE 2 sends the second information and the first indication information to the VUE 3.

414: The VUE 1 obtains the third information based on the second information and the first indication information.

415: The VUE 3 obtains the first information based on the second information and the first indication information.

The foregoing step 407 to step 415 are similar to the foregoing step 305 to step 313 respectively, and details are not described herein again.

The foregoing mainly describes the solutions provided in the embodiments of this application from a perspective of interaction between the network elements. It may be understood that, to implement the foregoing functions, the foregoing first communications device, the second communications device, and the third communications device include corresponding hardware structures and/or software modules for performing each function. A person skilled in the art should be easily aware that, in combination with example modules and algorithm steps described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

From a perspective of hardware structure, any communications device of the first communications device 101, the second communications device 102, and the third communications device 103 in FIG. 1 may be implemented by an entity device, may be jointly implemented by a plurality of entity devices, or may be a logical function module in an entity device. This is not specifically limited in this embodiment of this application.

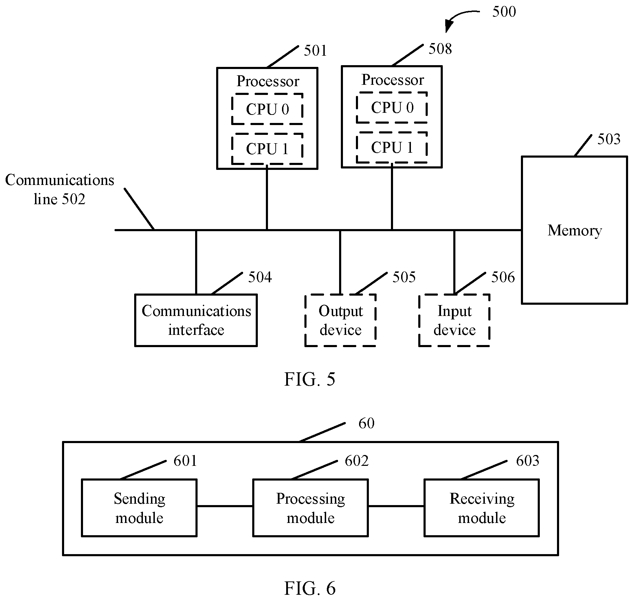

For example, any communications device of the first communications device 101, the second communications device 102, and the third communications device 103 in FIG. 1 may be implemented by using a communications device shown in FIG. 5. FIG. 5 is a schematic diagram of a hardware structure of a communications device according to an embodiment of this application. The communications device 500 includes at least one processor 501, a communications line 502, a memory 503, and at least one communications interface 504.

The processor 501 may be a general-purpose central processing unit (Central Processing Unit, CPU), a microprocessor, an application-specific integrated circuit (application-specific integrated circuit, server IC), or one or more integrated circuits configured to control program execution of the solution in this application.

The communications line 502 may include a path for transmitting information between the foregoing components.

The communications interface 504 uses any transceiver-type apparatus, configured to communicate with another device or a communications network such as the Ethernet, a radio access network (radio access network, RAN), or a wireless local area network (wireless local area networks, WLAN).

The memory 503 may be a read-only memory (read-only memory, ROM) or another type of static storage device capable of storing static information and an instruction, or a random access memory (random access memory, RAM) or another type of dynamic storage device capable of storing information and an instruction; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blue-ray disc, or the like), a magnetic disk storage medium or another magnetic storage device, or any other medium capable of carrying or storing expected program code in a form of an instruction or a data structure and capable of being accessed by a computer. However, this is not limited thereto. The memory may exist independently, and is connected to the processor by using the communication line 502. Alternatively, the memory may be integrated with the processor.

The memory 503 is configured to store a computer-executable instruction for performing the solutions in this application, and the processor 501 controls execution of the computer-executable instruction. The processor 501 is configured to execute the computer-executable instruction stored in the memory 503, to implement the policy control method provided in the following embodiments of this application.

Optionally, the computer-executable instruction in the embodiments of this application may also be referred to as application program code. This is not specifically limited in this embodiment of this application.

In specific implementation, in an embodiment, the processor 501 may include one or more CPUs, such as a CPU 0 and a CPU 1 in FIG. 5.

In specific implementation, in an embodiment, the communications device 500 may include a plurality of processors, such as the processor 501 and the processor 508 in FIG. 5. Each of the processors may be a single-core (single-CPU) processor, or may be a multi-core (multi-CPU) processor. The processor herein may refer to one or more devices, circuits, and/or processing cores configured to process data (for example, a computer program instruction).

In specific implementation, in an embodiment, the communications device 500 may further include an output device 505 and an input device 506. The output device 505 communicates with the processor 501, and may display information in a plurality of manners. For example, the output device 505 may be a liquid crystal display (liquid crystal display, LCD), a light emitting diode (light emitting diode, LED) display device, a cathode ray tube (cathode ray tube, CRT) display device, a projector (projector), or the like. The input device 506 communicates with the processor 501, and may receive an input from a user in a plurality of manners. For example, the input device 506 may be a mouse, a keyboard, a touchscreen device, a sensor device, or the like.

The communications device 500 may be a general-purpose device or a dedicated device. In specific implementation, the communications device 500 may be a desktop computer, a portable computer, a network server, a palmtop computer (personal digital assistant, PDA), a mobile phone, a tablet computer, a wireless terminal device, an embedded device, or a device having a structure similar to that in FIG. 5. A type of the communications device 500 is not limited in this embodiment of this application.

In the embodiments of this application, division into function modules may be performed on the first communications device, the second communications device, and the third communications device based on the foregoing method examples. For example, each function module may be obtained through division corresponding to each function, or two or more functions may be integrated into one processing module. The foregoing integrated module may be implemented in a form of hardware, or may be implemented in a form of a software function module. It should be noted that, in the embodiments of this application, division into the modules is an example, and is merely logical function division. In actual implementation, another division manner may be used.

For example, when the function modules are obtained through division in an integrated manner, FIG. 6 is a schematic structural diagram of a communications device.

When a communications device 60 shown in FIG. 6 is the first communications device, the first communications device includes a sending module 601, a processing module 602, and a receiving module 603.

The receiving module 603 is configured to receive first information sent by a second communications device, and receive third information sent by a third communications device, where the first information and the third information are sent on a same time-frequency resource.

The processing module 602 is configured to generate second information based on the first information and the third information.

The sending module 601 is configured to send the second information and first indication information to the second communications device and the third communications device, where the first indication information is used to indicate that the second information is generated based on the first information and the third information.

Optionally, in an example, the receiving module 603 is further configured to receive second indication information sent by the second communications device, where the second indication information is used to indicate the first communications device to send the first information to the third communications device.

Optionally, in an example, if the second indication information carries a first pilot signal, where the first pilot signal is used for channel estimation of a first channel amplitude, after the receiving module receives the second indication information, the processing module 602 is further configured to obtain the first channel amplitude through channel estimation based on the first pilot signal; and the sending module 601 is further configured to send the first channel amplitude to the second communications device, where the first information is obtained by the second communications device through precoding based on the first channel amplitude.

Optionally, in an example, if the second indication information does not carry a first pilot signal, where the first pilot signal is used for channel estimation of a first channel amplitude, after the receiving module 603 receives the second indication information, the sending module 601 is further configured to send the first pilot signal to the second communications device, so that the second communications device obtains the first channel amplitude through channel estimation by using the first pilot signal, and the second communications device obtains the first information through precoding by using the first channel amplitude.

Optionally, in an example, the receiving module 603 is further configured to receive third indication information sent by the third communications device.

Optionally, in an example, if the third indication information carries a second pilot signal, where the second pilot signal is used for channel estimation of a second channel amplitude, after the receiving module 603 receives the third indication information, the processing module 602 is further configured to obtain the second channel amplitude through channel estimation based on the second pilot signal; and the sending module 601 is further configured to send the second channel amplitude to the third communications device, where the third information is obtained by the third communications device through precoding based on the second channel amplitude.

Optionally, in an example, if the third indication information does not carry a second pilot signal, where the second pilot signal is used for channel estimation of a second channel amplitude, after the receiving module 603 receives the third indication information, the sending module 601 is further configured to send the second pilot signal to the third communications device, so that the third communications device obtains the second channel amplitude through channel estimation by using the second pilot signal, and the third communications device obtains the third information through precoding by using the second channel amplitude.

When the communications device 60 shown in FIG. 6 is the second communications device, the second communications device includes a sending module 601, a processing module 602, and a receiving module 603.

The sending module 601 is configured to send first information to a first communications device, where the first information and third information are sent on a same time-frequency resource, and the third information is information received by the first communications device from a third communications device.

The receiving module 603 is configured to receive second information and first indication information sent by the first communications device, where the second information is generated by the first communications device based on the first information and the third information, and the first indication information is used to indicate that the second information is generated based on the first information and the third information.

The processing module 602 is configured to obtain the third information based on the second information and the first indication information.

Optionally, in an example, the sending module 601 is further configured to send second indication information to the first communications device, where the second indication information is used to indicate the first communications device to send the first information to the third communications device.

Optionally, in an example, if the second indication information carries a first pilot signal, where the first pilot signal is used for channel estimation of a first channel amplitude, before the sending module 601 sends the first information to the first communications device, the receiving module 603 is further configured to receive the first channel amplitude sent by the first communications device, where the first channel amplitude is obtained by the first communications device through channel estimation based on the first pilot signal; and the processing module 602 is further configured to obtain the first information through precoding by using the first channel amplitude.

Optionally, in an example, if the second indication information does not carry a first pilot signal, where the first pilot signal is used for channel estimation of a first channel amplitude, after the sending module 601 sends the second indication information to the first communications device, the receiving module 603 is further configured to receive the first pilot signal sent by the first communications device; and the processing module 602 is further configured to obtain the first channel amplitude through channel estimation based on the first pilot signal, and obtain the first information through precoding by using the first channel amplitude.

When the communications device 60 shown in FIG. 6 is any one of the third communications devices, the third communications device includes a sending module 601, a processing module 602, and a receiving module 603.

The sending module 601 is configured to send third information to a first communications device, where the third information and first information are sent on a same time-frequency resource, and the first information is information received by the first communications device from a second communications device.

The receiving module 602 is configured to receive second information and first indication information sent by the first communications device, where the second information is generated by the first communications device based on the first information and the third information, and the first indication information is used to indicate that the second information is generated based on the first information and the third information.

The processing module 603 is configured to obtain the first information based on the second information and the first indication information.

Optionally, in an example, the sending module 601 is further configured to send third indication information to the first communications device.

Optionally, in an example, if the third indication information carries a second pilot signal, where the second pilot signal is used for channel estimation of a second channel amplitude, before the sending module 601 sends the third information to the first communications device, the receiving module 603 is further configured to receive the second channel amplitude sent by the first communications device, where the second channel amplitude is obtained by the first communications device through channel estimation based on the second pilot signal; and the processing module 602 is further configured to obtain the third information through precoding by using the second channel amplitude.

Optionally, in an example, if the third indication information does not carry a second pilot signal, where the second pilot signal is used for channel estimation of a second channel amplitude, after the sending module 601 sends the third indication information, the receiving module 603 is further configured to receive the second pilot signal sent by the first communications device; and the processing module 602 is further configured to obtain the second channel amplitude through channel estimation based on the second pilot signal, and obtain the third information through precoding based on the second channel amplitude.

In this embodiment, the communications device 60 is presented in a form in which function modules are obtained through division in an integrated manner. The "module" herein may be an application-specific integrated circuit (application-specific integrated circuit, ASIC), a processor and a memory for executing one or more software or firmware programs, an integrated logic circuit, and/or another device that can provide the foregoing functions. In a simple embodiment, a person skilled in the art may figure out that the communications device 60 may be in the form shown in FIG. 5.

For example, the processor 501 in FIG. 5 may invoke a computer-executable instruction stored in the memory 503, so that the communications device 60 performs the information transmission method in the foregoing method embodiment.

Specifically, functions/implementation processes of the sending module 601, the processing module 602, and the receiving module 603 in FIG. 6 may be implemented by the processor 501 in FIG. 5 invoking the computer-executable instruction stored in the memory 503. Alternatively, a function/an implementation process of the processing module 602 in FIG. 6 may be implemented by the processor 501 in FIG. 5 invoking the computer-executable instruction stored in the memory 503, and functions/implementation processes of the sending module 601 and the receiving module 603 in FIG. 6 may be implemented by the communications interface 504 in FIG. 5.

The first communications device, the second communications device, and the third communications device provided in the embodiments of this application may be configured to perform the foregoing information transmission method. Therefore, for technical effects that can be achieved by the first communications device, the second communications device, and the third communications device, refer to the foregoing method embodiments. Details are not described herein again.

In the foregoing embodiment, the communications device 60 is presented in a form in which function modules are obtained through division in an integrated manner. Certainly, in this embodiment of this application, each function module of an executive function network element and a control function network element may alternatively be obtained through division based on each corresponding function. This is not specifically limited in this embodiment of this application.

All or some of the foregoing embodiments may be implemented by using software, hardware, firmware, or any combination thereof. When the software is used to implement the embodiments, the embodiments may be implemented completely or partially in a form of a computer program product.

The computer program product includes one or more computer instructions. When the computer program instructions are loaded and executed on the computer, the procedure or functions according to the embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive solid state disk (SSD)), or the like.

A person of ordinary skill in the art may understand that all or some of the steps of the methods in the foregoing embodiments may be implemented by a program instructing relevant hardware. The program may be stored in a computer-readable storage medium. The storage medium may include: a ROM, a RAM, a magnetic disk, or an optical disc.

The policy control method, the network element, and the system provided in the embodiments of this application are described in detail above. The principle and implementation of this application are described herein through specific examples. The description about the embodiments is merely provided to help understand the method and core ideas of this application. In addition, a person of ordinary skill in the art can make variations and modifications to this application in terms of the specific implementations and application scopes based on the ideas of this application. Therefore, the content of specification shall not be construed as a limit to this application.

## Claims

1. An information transmission method, comprising:
receiving, by a first communications device, first information sent by a second communications device;
receiving, by the first communications device, third information sent by a third communications device, wherein the first information and the third information are sent on a same time-frequency resource;
generating, by the first communications device, second information based on the first information and the third information; and
sending, by the first communications device, the second information and first indication information to the second communications device and the third communications device, wherein the first indication information is used to indicate that the second information is generated based on the first information and the third information.

2. The method according to claim 1, wherein the method further comprises:
receiving, by the first communications device, second indication information sent by the second communications device, wherein the second indication information is used to indicate a first pilot signal;
obtaining, by the first communications device, a first channel amplitude through channel estimation based on the first pilot signal; and
sending, by the first communications device, the first channel amplitude to the second communications device, wherein the first channel amplitude is used by the second communications device to obtain the first information through precoding based on the first channel amplitude.

3. The method according to claim 1, wherein the method further comprises:
sending, by the first communications device, a first pilot signal to the second communications device, wherein the first pilot signal is used by the second communications device to obtain a first channel amplitude through channel estimation by using the first pilot signal, and to obtain the first information through precoding by using the first channel amplitude.

4. The method according to any one of claims 1 to 3, wherein the method further comprises:
receiving, by the first communications device, third indication information sent by the third communications device, wherein the third indication information is used to indicate a second pilot signal;
obtaining, by the first communications device, a second channel amplitude through channel estimation based on the second pilot signal; and
sending, by the first communications device, the second channel amplitude to the third communications device, wherein the second channel amplitude is used by the third communications device to obtain the third information through precoding based on the second channel amplitude.

5. The method according to any one of claims 1 to 3, wherein the method further comprises:
sending, by the first communications device, a second pilot signal to the third communications device, wherein the second pilot signal is used by the third communications device to obtain a second channel amplitude through channel estimation based on the second pilot signal, and to obtain the third information through precoding by using the second channel amplitude.

6. An information transmission method, comprising:
sending, by a second communications device, first information to a first communications device, wherein the first information and third information are sent on a same time-frequency resource, and the third information is information received by the first communications device from a third communications device;
receiving, by the second communications device, second information and first indication information that are sent by the first communications device, wherein the first indication information is used to indicate that the second information is generated by the first communications device based on the first information and the third information; and
obtaining, by the second communications device, the third information based on the second information and the first indication information.

7. The method according to claim 6, wherein the method further comprises:
sending, by the second communications device, second indication information to the first communications device, wherein the second indication information is used to indicate a first pilot signal;
receiving, by the second communications device, a first channel amplitude sent by the first communications device, wherein the first channel amplitude is obtained by the first communications device through channel estimation based on the first pilot signal; and
obtaining, by the second communications device, the first information through precoding by using the first channel amplitude.

8. The method according to claim 6, wherein the method further comprises:
receiving, by the second communications device, a first pilot signal sent by the first communications device;
obtaining, by the second communications device, a first channel amplitude through channel estimation based on the first pilot signal; and
obtaining, by the second communications device, the first information through precoding by using the first channel amplitude.

9. An information transmission method, comprising:
sending, by a third communications device, third information to a first communications device, wherein the third information and first information are sent on a same time-frequency resource, and the first information is information received by the first communications device from a second communications device;
receiving, by the third communications device, second information and first indication information that are sent by the first communications device, wherein the first indication information is used to indicate that the second information is generated by the first communications device based on the first information and the third information; and
obtaining, by the third communications device, the first information based on the second information and the first indication information.

10. The method according to claim 9, wherein the method further comprises:
sending, by the third communications device, third indication information to the first communications device, wherein the third indication information is used to indicate a second pilot signal;
receiving, by the third communications device, a second channel amplitude sent by the first communications device, wherein the second channel amplitude is obtained by the first communications device through channel estimation based on the second pilot signal; and
obtaining, by the third communications device, the third information through precoding by using the second channel amplitude.

11. The method according to claim 9, wherein the method further comprises:
receiving, by the third communications device, a second pilot signal sent by the first communications device;
obtaining, by the third communications device, a second channel amplitude through channel estimation based on the second pilot signal; and
obtaining, by the third communications device, the third information through precoding based on the second channel amplitude.

12. A communications device, wherein the communications device is a first communications device, and the communications device comprises:
a receiving module, configured to receive first information sent by a second communications device, and receive third information sent by a third communications device, wherein the first information and the third information are sent on a same time-frequency resource;
a processing module, configured to generate second information based on the first information and the third information; and
a sending module, configured to send the second information and first indication information to the second communications device and the third communications device, wherein the first indication information is used to indicate that the second information is generated based on the first information and the third information.

13. The communications device according to claim 12, wherein
the receiving module is further configured to receive second indication information sent by the second communications device, wherein the second indication information is used to indicate a first pilot signal;
the processing module is further configured to obtain a first channel amplitude through channel estimation based on the first pilot signal; and
the sending module is further configured to send the first channel amplitude to the second communications device, wherein the first channel amplitude is used by the second communications device to obtain the first information through precoding based on the first channel amplitude.

14. The communications device according to claim 12, wherein
the sending module is further configured to send a first pilot signal to the second communications device, wherein the first pilot signal is used by the second communications device to obtain a first channel amplitude through channel estimation by using the first pilot signal, and to obtain the first information through precoding by using the first channel amplitude.

15. The communications device according to any one of claims 12 to 14, wherein
the receiving module is further configured to receive third indication information sent by the third communications device, wherein the third indication information is used to indicate a second pilot signal;
the processing module is further configured to obtain a second channel amplitude through channel estimation based on the second pilot signal; and
the sending module is further configured to send the second channel amplitude to the third communications device, wherein the second channel amplitude is used by the third communications device to obtain the third information through precoding based on the second channel amplitude.

16. The communications device according to any one of claims 12 to 14, wherein
the sending module is further configured to send a second pilot signal to the third communications device, wherein the second pilot signal is used by the third communications device to obtain a second channel amplitude through channel estimation based on the second pilot signal, and to obtain the third information through precoding by using the second channel amplitude.

17. A communications device, wherein the communications device is a second communications device, and the communications device comprises:
a sending module, configured to send first information to a first communications device, wherein the first information and third information are sent on a same time-frequency resource, and the third information is information received by the first communications device from a third communications device;
a receiving module, configured to receive second information and first indication information that are sent by the first communications device, wherein the first indication information is used to indicate that the second information is generated by the first communications device based on the first information and the third information; and
a processing module, configured to obtain the third information based on the second information and the first indication information.

18. The communications device according to claim 17, wherein
the sending module is further configured to send second indication information to the first communications device, wherein the second indication information is used to indicate a first pilot signal;
the receiving module is further configured to receive a first channel amplitude sent by the first communications device, wherein the first channel amplitude is obtained by the first communications device through channel estimation based on the first pilot signal; and
the processing module is further configured to obtain the first information through precoding by using the first channel amplitude.

19. The communications device according to claim 17, wherein
the receiving module is further configured to receive a first pilot signal sent by the first communications device; and
the processing module is further configured to obtain a first channel amplitude through channel estimation based on the first pilot signal; and obtain the first information through precoding by using the first channel amplitude.

20. A communications device, wherein the communications device is a third communications device, and the communications device comprises:
a sending module, configured to send third information to a first communications device, wherein the third information and first information are sent on a same time-frequency resource, and the first information is information received by the first communications device from a second communications device;
a receiving module, configured to receive second information and first indication information that are sent by the first communications device, wherein the first indication information is used to indicate that the second information is generated by the first communications device based on the first information and the third information; and
a processing module, configured to obtain the first information based on the second information and the first indication information.

21. The communications device according to claim 20, wherein
the sending module is further configured to send third indication information to the first communications device, wherein the third indication information is used to indicate a second pilot signal;
the receiving module is further configured to receive a second channel amplitude sent by the first communications device, wherein the second channel amplitude is obtained by the first communications device through channel estimation based on the second pilot signal; and
the processing module is further configured to obtain the third information through precoding by using the second channel amplitude.

22. The communications device according to claim 20, wherein
the receiving module is further configured to receive a second pilot signal sent by the first communications device; and
the processing module is further configured to obtain a second channel amplitude through channel estimation based on the second pilot signal; and obtain the third information through precoding based on the second channel amplitude.

23. A communications device, comprising:
a processor and a memory, wherein the memory is configured to store a computer operation instruction; and
the processor is configured to invoke the computer operation instruction, so that the communications device is enabled to perform the information transmission method according to any one of claims 1 to 11.
